# DEMANDE DE BREVET EUROPEEN

(11) **EP 1 560 401 A1**
(43) Date de publication de la demande: **03.08.2005**
(21) Numéro de dépôt: 05290192.3
(22) Date de dépôt: 28.01.2005
(51) Int. Cl.: H04M 1/23, H04M 1/02

(54) **Téléphone comportant un clavier à touches jointives**

(30) Priorité: 28.01.2004 FR 0400792
(71) Demandeur: SAGEM SA, 75015 Paris (FR)
(72) Inventeur: Julien, Alain, 95240 Cormeilles en Parisis (FR)
(74) Mandataire: Callon de Lamarck, Jean-Robert

(57) **Abrégé**

L'invention concerne un téléphone comportant un boîtier (5) présentant une surface externe (6) et un clavier (3) à touches (30) jointives, caractérisé en ce que ladite surface (6) comporte un renfoncement (100) de réception du clavier (3), le renfoncement (100) comportant une paroi (102) de fond comportant des orifices (101) et le clavier (3) comportant des actuateurs (320) aptes à coopérer avec les orifices (101), les actuateurs (320) étant aptes à transmettre des mouvements des touches (30) à travers les orifices (101).

## Description

### DOMAINE TECHNIQUE GENERAL

La présente invention concerne les téléphones comportant un clavier à touches jointives.

Plus précisément, mais non limitativement, elle concerne un téléphone mobile comportant un clavier à touches jointives, le clavier et/ou une partie du boîtier du téléphone étant amovibles.

### ETAT DE L'ART

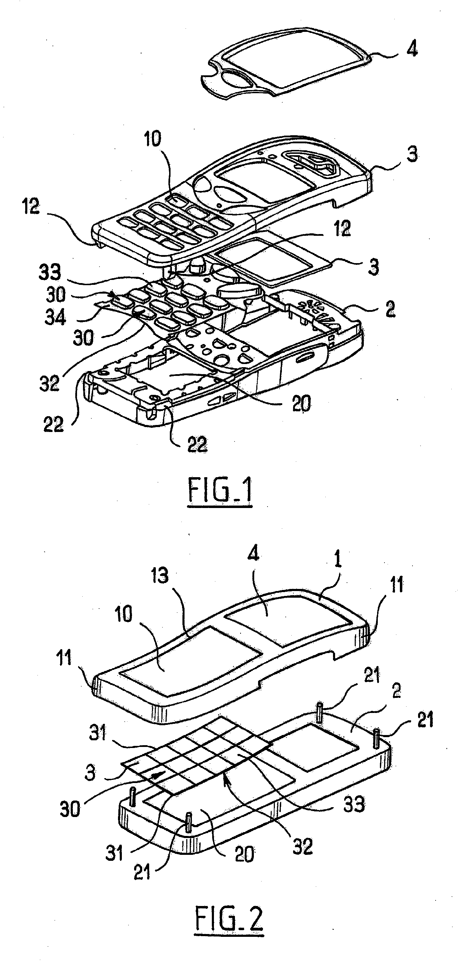

La figure 1 représente une vue éclatée d'un téléphone connu comportant une coque formant boîtier et divisée en une partie antérieure 1 et une partie postérieure 2 coopérant l'une avec l'autre. Dans la suite de la présente description, les termes « antérieur » et « postérieur » sont pris dans un sens de fonctionnement normal du téléphone, la partie antérieure faisant référence à la partie comportant en général les éléments principaux d'actionnement du téléphone, un éventuel écran, ainsi que le haut parleur.

Un élément 4 formant écran est disposé sur la partie antérieure 1 du téléphone. Bien entendu, un tel écran 4 est optionnel et s'applique avantageusement aux téléphones mobiles.

Un clavier 3 est monté entre les parties antérieure 1 et postérieure 2 de la coque du téléphone, c'est-à-dire dans le boîtier du téléphone. Le clavier 3 comporte des touches 30.

Chaque touche 30 comporte d'une part une partie antérieure 33 en saillie par rapport et venue de matière sur une plaque 34 commune aux touches 30. La plaque 34 est préférentiellement en matière plastique souple. Chaque partie antérieure 33 est apte à coopérer avec des orifices 10 formés dans la partie antérieure 1 de la coque et est apte à remplir un orifice 10.

Chaque touche 30 comporte d'autre part une partie postérieure 32 comportant préférentiellement des actuateurs aptes à coopérer avec des moyens 20 électroniques disposés sur la partie postérieure 2 de la coque.

Comme le montre la figure 1, le clavier 3 se monte en dessous de la partie antérieure 1 de la coque. Ainsi, une fois le clavier 3 monté dans la coque, un utilisateur du téléphone peut avoir accès aux touches 30 en saillie dans les orifices 10 de la partie antérieure 1. La pression des touches 30 permet l'activation du téléphone et la composition de numéros par exemple.

Les parties antérieure 1 et postérieure 2 de la coque du téléphone sont préférentiellement amovibles l'une par rapport à l'autre.

Par exemple, des moyens 12 formant crochets sur la partie antérieure 1 coopèrent avec des moyens 22 situés en regard sur la partie postérieure 2 pour former un clip mécanique qui permet à un utilisateur de séparer facilement l'une de l'autre les parties antérieure 1 et postérieure 2, et ce à tout moment.

On comprend que le clavier 3 est également amovible du téléphone une fois que les parties antérieure 1 et postérieure 2 sont séparées l'une de l'autre.

Les téléphones précédents ne sont cependant pas tout à fait satisfaisants.

En effet, du fait des orifices 10, les touches 30 sont séparées les unes des autres, et l'on souhaite pouvoir disposer de téléphones comportant des touches jointives.

La figure 2 montre une vue éclatée d'un exemple d'un mode de réalisation d'un téléphone connu comportant également une coque formant boîtier et divisée en une partie antérieure 1 et une partie postérieure 2, et un clavier 3 comportant des touches 30 jointives, le clavier étant connu de l'homme du métier.

Un élément 4 formant écran est avantageusement disposé sur la partie antérieure 1 du téléphone.

Le clavier 3 est disposé entre les parties antérieure 1 et postérieure 2 de la coque du téléphone.

On rappelle que les touches 30 du clavier 3 sont jointives. De ce fait, la partie antérieure 1 ne comporte plus une série d'orifices mais une seule grande ouverture 10 pour le clavier 3 à touches 30 jointives.

Comme le montre la figure 2, le clavier 3 se monte comme sur la figure 1 en dessous de la partie antérieure 1 de la coque. A cet effet, le clavier 3 comporte sur sa périphérie des moyens 31 aptes à coopérer avec des moyens 13 sur la partie antérieure 1 de la coque. Les moyens 31 et 13 peuvent être du type nervures/rainures. La coopération des moyens 31 et 13 évite que le clavier 3 puisse sortir de la coque.

La partie postérieure 2 comporte des moyens de fixation 21 coopérant avec des moyens 11 sur la partie antérieure 1. Les moyens de fixation 21 sont par exemple des vis coopérant avec des alésages 11 filetés. Ce mode de fixation permet de renforcer la rigidité et la solidité générale du téléphone. Les parties antérieure 1 et postérieure 2 ne sont dans ce cas pas directement amovibles l'une par rapport à l'autre.

Ainsi, une fois le clavier 3 monté dans la coque, un utilisateur du téléphone peut avoir accès à la partie antérieure 33 des touches 30 et compose des numéros par exemple, les touches 30 comportant dans une partie postérieure 32 des moyens formant actuateurs aptes à activer des moyens 20 électroniques disposés sur la partie postérieure 2 de la coque, dans le boîtier.

Les téléphones comportant un clavier à touches jointives précédents présentent cependant des inconvénients.

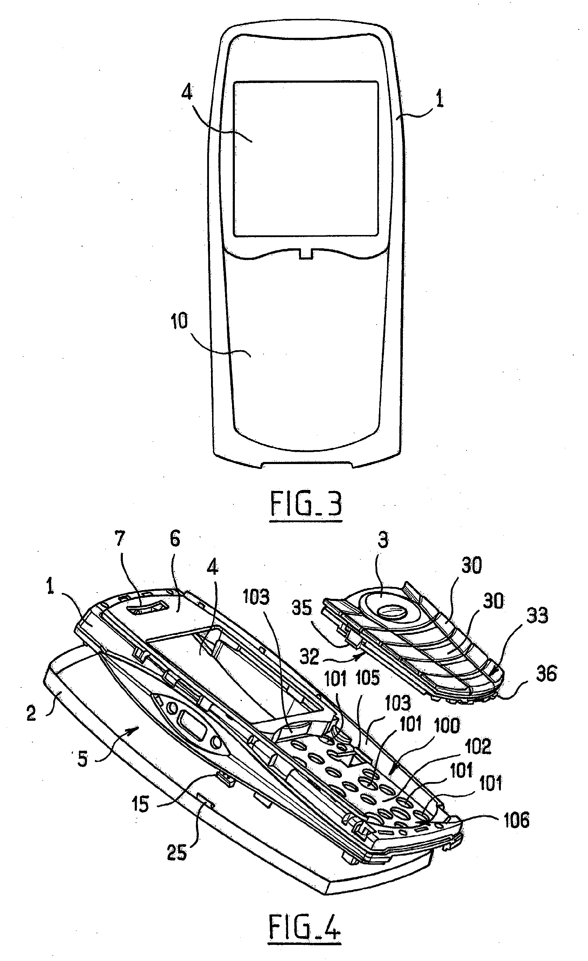

En effet, on rappelle que du fait de la présence des touches jointives 30, la partie antérieure 1 comporte une grande ouverture 10 - plus clairement visible sur la figure 3 - pour laisser un accès au clavier 30.

La grande ouverture 10 engendre une fragilité et un manque de rigidité de la partie antérieure 1.

La partie antérieure 1 est donc difficile à manipuler lors d'une phase de montage industriel. Elle se rompt facilement.

La partie antérieure 1 est également facilement rompue lors de l'utilisation du téléphone, notamment en cas de chute du téléphone. On rappelle que pour renforcer la rigidité et la solidité du téléphone des figures 2 et 3, des moyens de fixation 21 et 11 plus importants entre les parties de la coque d'une part et des moyens 31 et 13 entre le clavier et la coque d'autre part doivent être prévus, ce qui limite l'amovibilité de la partie antérieure et/ou du clavier du téléphone.

Une fois la partie antérieure 1 enlevée du téléphone, cette dernière peut se casser facilement lors d'une manipulation par un utilisateur.

### PRESENTATION DE L'INVENTION

L'invention propose de pallier au moins un des inconvénients des téléphones de l'art antérieur.

Un des buts de l'invention est de proposer un téléphone dont le clavier comporte des touches jointives et dont au moins la partie antérieure est rigide.

Un des buts de l'invention est notamment de proposer un téléphone dont la partie antérieure est facilement adaptable à un montage industriel.

Un des autres buts de l'invention est de proposer un téléphone qui comporte un boîtier dont au moins la partie antérieure est facilement amovible.

Un des buts de l'invention est également de proposer un téléphone dont la partie antérieure est facilement manipulable par un utilisateur sans risque d'être rompue.

Un des autres buts de l'invention est de proposer un téléphone dont le clavier comporte des touches jointives et qui soit facilement amovible.

A cet effet, l'invention propose un téléphone selon la revendication 1.

Des modes de réalisation avantageux sont présentés dans les revendications dépendantes.

L'invention présente de nombreux avantages.

Elle permet notamment d'obtenir un clavier à touches jointives qui soit rigide.

L'aspect extérieur de la surface du clavier reste sensiblement plat. Il n'y a pas de déformation lors de la manipulation du téléphone. Il n'y a pas de chevauchement des touches.

La lumière venant du boîtier est guidée vers les touches de façon efficace.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels:
- les figures 1 et 2, déjà commentées, représentent schématiquement des vues éclatées de téléphones selon l'art antérieur ;
- la figure 3, également déjà discutée, représente une vue de face de la zone antérieure d'un boîtier d'un téléphone selon la figure 2 ;
- la figure 4 représente schématiquement une vue éclatée d'un mode de réalisation possible d'un téléphone selon l'invention.
- la figure 5 montre schématiquement une vue de face de la zone antérieure d'un boîtier d'un téléphone selon l'invention ;
- la figure 6 est une vue éclatée et schématique d'un clavier à touches jointives ;
- la figure 7 montre schématiquement une vue d'un téléphone selon l'invention comportant un clavier en place dans le renfoncement ;
- la figure 8A est une vue selon la coupe A-A de la figure 7
- la figure 8B est un détail de la figure 8A, elle-même ;
- la figure 9A est une vue selon la coupe B-B de la figure 7 ; et
- la figure 9B est un détail de la figure 9A.

Dans l'ensemble des figures, les éléments ayant des fonctions similaires portent des références numériques identiques.

### DESCRIPTION DETAILLEE

La figure 4 représente schématiquement une vue éclatée d'un mode de réalisation possible d'un téléphone selon l'invention.

Le téléphone comporte principalement un boîtier 5 présentant une surface externe 6 et un clavier 3 à touches 30 jointives.

La surface 6 comporte un renfoncement 100 de réception du clavier 3. Le renfoncement 100 est un évidement de matière venue sur le boîtier 5.

Le renfoncement 100 est préférentiellement défini sur une zone antérieure du boîtier 5.

On rappelle que les termes « antérieur » et « postérieur » sont pris dans un sens de fonctionnement normal du téléphone, la zone antérieure faisant référence à la zone comportant un écran 4 ainsi que des orifices 7 d'un haut parleur du téléphone. L'écran 4 est optionnel et on peut prévoir des téléphones selon l'invention ne comportant pas un tel écran 4.

Le renfoncement 100 est situé préférentiellement sur une zone jouxtant une zone comportant l'écran 4.

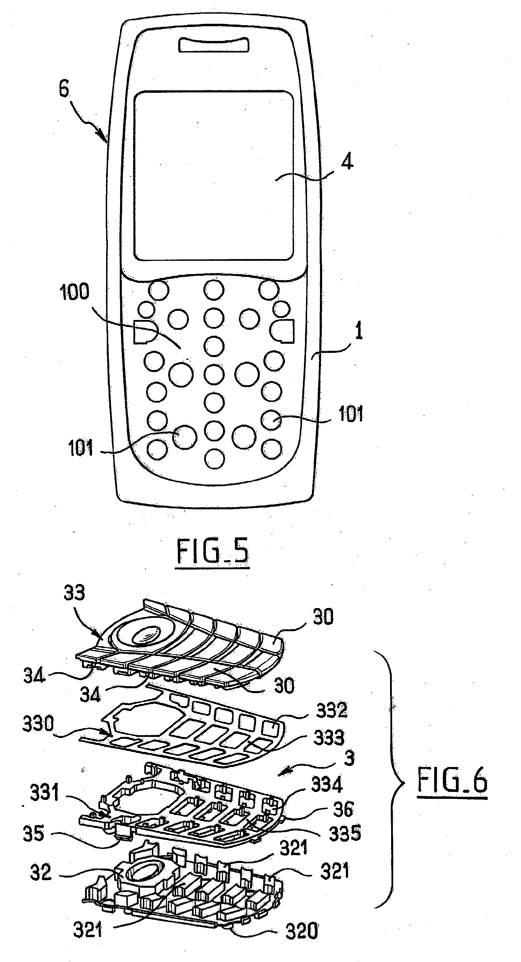

Le renfoncement 100 comporte une paroi 102 de fond d'extension, comportant des orifices 101, et sensiblement parallèle à la surface de l'écran 4 ou sensiblement parallèle à la majeure partie de la surface externe de la zone antérieure du boîtier 5. La figure 5 montre une vue de face de la zone antérieure du boîtier 5.

Le renfoncement 100 comporte également des parois 103 latérales d'extension sensiblement perpendiculaire à la paroi 102 de fond.

Le contour extérieur du renfoncement 100 défini par les parois latérales 103 est complémentaire du contour extérieur du clavier 3.

La paroi 102 est apte à coopérer avec une surface postérieure 32 du clavier 3. Le volume intérieur défini dans le renfoncement 100 correspond sensiblement au volume du clavier 3.

Le clavier 3 est apte à être monté dans le renfoncement 100. Il vient se loger dans le renfoncement 100 dans un sens allant de la zone antérieure du boîtier 5 vers la zone postérieure du boîtier 5. Dans la position montée, une surface antérieure 33 du clavier est sensiblement au niveau de l'écran 4 ou au niveau de la majeure partie de la surface externe de la zone antérieure du boîtier 5.

Le clavier 3 comporte des moyens 35 et 36 de fixation complémentaires de moyens 105 et 106 situés dans le renfoncement 100. Les moyens 35 et 36 sont venus de matière sur le clavier 3, les moyens 105 et 106 sont venus de matière sur le renfoncement 100.

La coopération des moyens 35 et 105 d'une part et la coopération des moyens 36 et 106 d'autre part sont aptes à fixer le clavier 3 dans le renfoncement 100.

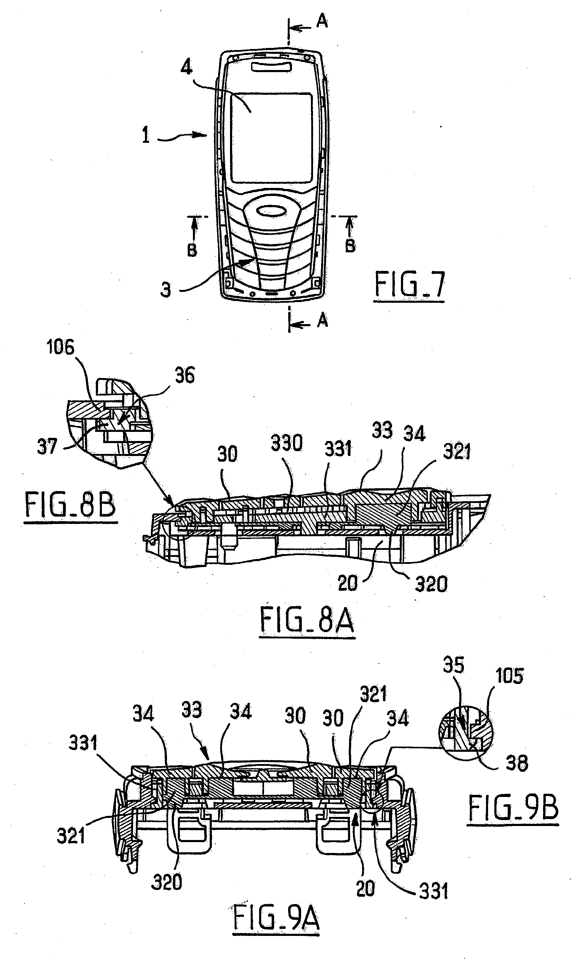

Plus précisément, comme le montre la figure 6, le clavier 3 comporte une surface extérieure 33 située sur la partie antérieure du clavier 3 et formant les touches 30 jointives. Une telle surface 33 est préférentiellement réalisée en matériau plastique. Le plastique est préférentiellement rigide.

Les touches 30 sont jointives, ce qui signifie qu'il n'y a pas de matière du boîtier entre les touches 30, et qu'elles sont serrées les unes par rapport aux autres. Les touches 30 comporte des parties postérieures 34.

Le clavier 3 comporte également de façon optionnelle une surface 330 formant cache lumière. Une telle surface est constituée d'un matériau opaque et permet de guider davantage une éventuelle lumière en provenance de l'intérieur du boîtier 5 et à destination des touches 30 du clavier 3.

Un tel guidage est effectué en évitant une dispersion de la lumière entre les touches 30. La surface 330 comporte ainsi des orifices 332 complémentaires des parties postérieures 34 des touches 30. De la matière 333 entre les orifices 332 permet de cacher la lumière en provenance de l'intérieur du boîtier.

Le clavier 3 comporte également une surface 331, faisant également éventuellement office de guide lumière, et permettant le cas échéant de guider davantage une lumière en provenance de l'intérieur du boîtier 5 et à destination des touches 30 du clavier 3, en évitant une dispersion de la lumière entre les touches 30.

La surface 331 solidifie l'ensemble du clavier 3. A cet effet, la surface 331 est préférentiellement en matière plastique rigide.

La surface 331 permet également de guider la partie postérieure 34 des touches 30. Elle possède donc des orifices 334 complémentaires des parties postérieures 34 des touches 30.

De la matière 335 entre les orifices 334 est avantageusement opaque en cas d'absence de la surface 330. L'opacité peut être obtenue du fait de la composition de la surface 331 en matière plastique opaque, ou par sérigraphie sur la surface 331.

La surface 331 comporte également les moyens 35 et 36 de fixation du clavier 3 dans le renfoncement 100.

Avantageusement, les moyens 35 et 36 de fixation du clavier 3 forment respectivement des ergots 37 et 38. Les ergots 37 et 38 sont venus de matière sur la surface 331.

Le clavier 3 comporte enfin une surface 32 comportant les actuateurs 320 liés aux touches 30. La surface 32 est avantageusement en plastique souple.

Comme le montre la figure 6, la surface 32 comporte des parties en saillies 321 sur la partie antérieure de la couche 32. Les saillies 321 sont complémentaires des orifices 334 et 332 des surfaces respectives 330 et 331, et viennent coopérer avec les parties postérieures 34 des touches 30. On colle avantageusement les saillies 321 et les parties postérieures 34. Une coopération mécanique ou une déformation plastique sont également possibles pour mettre en coopération les saillies 321 et les parties 34.

Selon un mode de réalisation avantageux, les touches 30 sont mises en coopération individuellement sur les saillies 321. La surface 33 est donc formée par l'ensemble des touches individuelles.

La surface 32 comporte sur sa partie postérieure les actuateurs 320 aptes à coopérer avec les orifices 101 de la paroi 102 du renfoncement 100, une fois que le clavier 3 est en place dans le renfoncement 100, comme le montre la figure 7. Les actuateurs sont classiquement des excroissances oblongues de matière venue sur la surface 32. Les actuateurs 320 sont visibles sur les figures 8A et 9A.

Les actuateurs 320 sont aptes à transmettre des mouvements des touches 30 à travers les orifices 101. Un mouvement de sollicitation des touches 30 de la surface 33 est donc transmis à une partie électronique dans le boîtier pour la composition des numéros et l'activation du téléphone par exemple.

Ainsi, la paroi 102 de fond comporte au moins un orifice 101 au droit de chaque actuateur 320. Elle peut en comporter plus pour des raisons de moulage et de fabrication ou de montage.

La coopération des différentes surfaces est plus clairement visible sur les vues en coupe longitudinale sur la figure 8A et en coupe radiale sur la figure 9A.

Avantageusement, le clavier 3 est amovible du renfoncement 100. Un utilisateur peut donc personnaliser facilement à tout moment son clavier.

La figure 8B montre ainsi que l'ergot 37 coopère avec un bord saillant 106 du renfoncement 100 pour former un crochet mécanique. L'ergot 37 est monté de façon amovible dans les moyens 106. Avantageusement, le clavier 3 comporte deux ergots 37 situés en partie basse du clavier 3, à l'opposé de l'écran 4. Les deux ergots 37 peuvent bien entendu être situés à d'autres endroits.

La figure 9B montre que l'ergot 38 coopère avec un bord saillant 105 latéral du renfoncement 100 pour former un clips mécanique. L'ergot 38 est donc monté de façon amovible dans les moyens 105. Avantageusement, le clavier 3 comporte deux ergots 38, un de chaque côté du clavier 3.

D'autres moyens mécaniques permettant l'amovibilité du clavier 3 du renfoncement 100 sont bien entendu envisageables.

Très préférentiellement, le boîtier 5 comporte deux parties 1 et 2 complémentaires l'une de l'autre, une partie antérieure 1 et une partie postérieure 2.

Chaque partie 1 et 2 comporte des moyens de fixation respectifs 15 et 25, complémentaires les uns des autres.

La coopération des moyens 15 et 25 est apte à fixer les deux parties 1 et 2 du boîtier 5 l'une avec l'autre. Cette coopération peut se matérialiser par des moyens mécaniques complémentaires, par exemple du type crochet 15/rainure 25, comme le montre la figure 4.

Avantageusement, les deux parties 1 et 2 sont amovibles l'une de l'autre. Un utilisateur peut donc personnaliser son boîtier ou avoir accès à l'intérieur du boîtier à chaque instant, facilement.

Le boîtier 5 est préférentiellement en matière plastique, mais peut être en n'importe quelle autre matière.

On rappelle qu'avantageusement, le boîtier 5 comporte un écran 4 d'affichage. Un téléphone selon l'invention peut cependant ne pas comporter un tel écran 4.

Le téléphone peut être du type terminal de téléphonie mobile. Il peut cependant être d'un autre type, comme par exemple un terminal de télécommunications européennes sans fil ou « Digital European Cordless Telecommunication (DECT) ».

L'invention procure de nombreux avantages.

La paroi 102 rigidifie notamment le boîtier du téléphone, tout en permettant la mise en place d'un clavier à touches jointives.

Le boîtier est plus solide et plus rigide. Il est donc plus facilement montable ou manipulable industriellement.

Le clavier est avantageusement amovible. Dans ce cas, le boîtier est moins facilement cassé lors d'une manipulation par un utilisateur.

## Revendications

1. Téléphone comportant un boîtier (5) présentant une surface externe (6) et un clavier (3) à touches (30) jointives, ladite surface (6) comportant un renfoncement (100) de réception du clavier (3), le renfoncement (100) comportant une paroi (102) de fond comportant des orifices (101) et le clavier (3) comportant une surface (32) comportant d'une part des parties en saillies (321) et d'autre part des actuateurs (320) aptes à coopérer avec les orifices (101) et à transmettre des mouvements des touches (30) à travers les orifices (101), **caractérisé en ce que** les saillies (321) coopèrent avec des parties postérieures (34) des touches (30).

2. Téléphone selon la revendication 1, dans lequel les saillies (321) sont collées aux touches (30).

3. Téléphone selon la revendication 1 ou 2, dans lequel le clavier (3) comporte des moyens de fixation (35, 36) complémentaires de moyens (105, 106) situés dans le renfoncement, la coopération des moyens étant apte à fixer le clavier dans le renfoncement.

4. Téléphone selon la revendication 3, dans lequel les moyens (35, 36) de fixation du clavier forment des ergots (37, 38) venus de matière sur le clavier (3).

5. Téléphone selon l'une des revendications 1 à 4, dans lequel le clavier (3) comporte une surface (331) de rigidification de l'ensemble du clavier (3) comportant des orifices (334) complémentaires des parties postérieures (34) des touches (30).

6. Téléphone selon la revendication précédente, dans lequel la matière de la surface (331) de rigidification (335) entre les orifices complémentaires (334) est opaque.

7. Téléphone selon la revendication 5 lorsqu'elle dépend de la revendication 3, dans lequel la matière de la surface (331) de rigidification (335) entre les orifices complémentaires (334) est opaque.

8. Téléphone selon l'une des revendications 1 à 7, dans lequel le clavier (3) est amovible du renfoncement (100).

9. Téléphone selon l'une des revendications 1 à 8, dans lequel la paroi (102) de fond comporte au moins un orifice (101) au droit de chaque actuateur (320).

10. Téléphone selon l'une des revendications 1 à 9, du type terminal de téléphonie mobile ou de télécommunications européennes sans fil.
